# EUROPEAN PATENT SPECIFICATION

(11) **EP 1 662 885 B1**
(45) Date of publication and mention of the grant of the patent: **12.09.2007**
(21) Application number: 04705191.7
(22) Date of filing: 26.01.2004
(51) Int. Cl.: A21D 8/06, A21D 10/02, A21D 6/00

(54) **A METHOD OF BAKING FROZEN DOUGH PIECES**
VERFAHREN ZUM BACKEN VON GEFRORENEN TEIGSTÜCKEN
PROCEDE DE CUISSON AU FOUR DE MORCEAUX DE PATE SURGELEE

(30) Priority: 11.09.2003 EP 03077879
(43) Date of publication of application: 07.06.2006
(73) Proprietor: CSM Nederland B.V., 1112 XE Diemen (NL)
(72) Inventor: KEMP, Derek, Stockport SK4 3HL (GB); FLEMING, Christopher, Warrington WA2 7BX (GB); SKELTON, Brian, Fallowfield M14 6PH (GB); MORET, Peter, Hawarden CH5 3TY (GB)
(74) Representative: van Westenbrugge, Andries
(86) International application number: PCT/NL2004/000056
(87) International publication number: WO 2005/023008

(56) References cited:
- DE-A- 2 446 581
- US-A- 2 502 172
- US-B1- 6 383 530

## Description

### TECHNICAL FIELD OF THE INVENTION

The present invention relates to a method of baking frozen dough pieces using a multi-step baking program that yields a baked product that is essentially indistinguishable from a baked product prepared from freshly prepared non-frozen dough.

### BACKGROUND OF THE INVENTION

The preparation of dough typically involves the steps of admixing flour, water, leavening agent and other dough ingredients, followed by kneading, optionally proofing and/or laminating, and moulding of the dough into dough pieces. These preparation steps are laborious and time consuming. Attempts have been made to provide an industrially prepared storage stable ready-to-bake dough that may be baked off by a baker, supermarket or consumer whenever the need arises. In particular if such a dough has been pre-proofed, freshly baked products can be prepared within a short timeframe at any moment of the day.

US 6 383 530 discloses a method for baking shaped and frozen bread dough.

US 4,406,911 discloses a frozen pre-proofed dough that can be baked into a finished loaf straight from the freezer. The dough is yeast-leavened and formed into loaves before freezing and maintains its shelf-life stability through the addition of hydrophobic colloids, film-forming proteins and surfactants. Baked bread is prepared from these loaves by placing them in a cold oven, immediately from the freezer, which oven is then heated to about 170-180 °C to yield the baked bread after 60 minutes.

US 5,447,738 discloses a frozen pre-proofed dough that can be baked immediately from the freezer and contains a dough-improver ingredient, such as pectin or guar gum. The dough is baked immediately from the freezer at an oven temperature of about 220 °C. Products that can be obtained in this manner typically include buns, Danish pastries, croissants, and baguettes.

An important drawback of frozen dough products is that they need to be defrosted before the actual bake-off in order to obtain a baked product of good quality. Alternatively, if the product is not defrosted before baking, and especially if the dough piece is relatively large (e.g. > 200 grams), a baked product of inferior quality is obtained.

### SUMMARY OF THE INVENTION

The inventors have developed a method for baking off dough pieces straight from the freezer, which method yields baked products of high quality after a relatively short oven period.

A serious problem usually encountered with instant bake-off of frozen dough pieces is the development of an outer crust early on in the baking process, i.e. well before the dough has fully risen. As a result the dough pieces will develop tears and cracks and yield a baked product of poor quality. This problem is particularly manifest in larger dough pieces, e.g. pieces of more than 200 g, particularly more than 400g.

The invention concerns a method of baking frozen dough pieces using a multi-step baking program comprising a first step of heating the frozen dough piece in an oven comprising a humid atmosphere with a dewpoint of at least 40 °C for a sufficiently long period to thaw a significant part of the dough piece and a subsequent step of baking the dough piece in an oven comprising a dry atmosphere with a temperature of at least 140 °C to obtain a baked product exhibiting a soft crumb and a crispy, browned crust.

It is known in the art to employ steam injections in oven baking processes. However, such injections are insufficient to maintain conditions of high dewpoint for substantial periods of time. Frozen dough pieces that are baked in ovens that employ such steam injections in a conventional way will produce baked products that exhibit cracks and tears due to premature crust formation.

In the present method the frozen dough is thawed, optionally proofed, and baked in an oven within a short term period without the disadvantages associated with known instant bake-off methods for frozen dough pieces. Thus, the method enables fast and flexible production of high quality baked products from a storage stable dough product.

### DETAILED DESCRIPTION OF THE INVENTION

Accordingly, the invention relates to a method of baking a frozen dough piece in an oven using a multi-step baking program, said method comprising a first step of heating the frozen dough piece in an oven comprising a humid atmosphere with a dewpoint of at least 40 °C for a sufficiently long period to completely thaw the exterior of the dough piece to a depth of at least 5 mm, preferably of at least 8 mm, and a subsequent step of baking the dough piece in an oven comprising a dry atmosphere with a temperature of at least 140 °C, to obtain a baked product exhibiting a soft crumb and a crispy, browned crust.

The term "oven" refers to a device that can be used to transfer heat to the dough piece, preferably by means of hot air and/or heat radiation.

The terminology "to thaw the exterior of the dough piece to a depth of at least 5 mm" refers to the fact that thawing is continued until the dough piece comprises a defrosted external layer with a thickness of at least 5 mm. It is noted that ice is a bad heat conductor and that it usually takes a long time to defrost a dough piece to a depth of at least 5 mm, particularly if such a dough piece has been deep frozen.

The terminology "first step" and "subsequent step" as used above should not be construed to imply that there cannot be an intermediate step. Likewise, there may also be an additional processing step the"subsequent step".

Although the inventors do not wish to be bound by theory, it is believed that the continuous condensation of moisture onto the dough pieces during the first heating step provides an excellent heat transfer mechanism that facilitates rapid thawing of the dough piece(s) whilst at the same time preventing premature crust formation. In a particularly preferred embodiment, the conditions during the first heating step are adapted in such a manner that a layer of condensed moisture is maintained on the dough piece throughout said first heating step. These conditions are to be maintained until such time that a significant part of the dough piece has been defrosted. During this period the volume of the dough piece will usually increase as a result of proofing and/or ovenspring.

Once the dough piece has been defrosted sufficiently it may be baked under a relatively dry atmosphere that will favour crust formation. During this subsequent baking step additional volume increase as a result of further proofing and/or ovenspring may be observed. However, most of said volume gain is preferentially realised before crust formation starts in earnest.

Typically, in the present method the first heating step comprises heating the dough piece in an oven comprising a humid atmosphere with a dewpoint of at least 40 °C between 3 and 45 minutes, preferably between 4 and 45 minutes, more preferably between 6 and 40 minutes, most preferably between 8 and 30 minutes. It is preferred that during the first heating step the atmosphere in the oven has a dewpoint of at least 60 °C, more preferably of at least 70 °C and most preferably of at least 80 °C. The higher the dewpoint of the atmosphere in the oven, the longer condensation of moisture onto the dough piece can be maintained during the heating process. Once the exterior of the dough piece has reached a temperature above the dewpoint, condensation will inevitably stop.

The present method is particularly suitable for baking off deep frozen dough pieces. Hence in a preferred embodiment, at the beginning of the first heating step the dough piece has a temperature of less than -10 °C, more preferably of less than -15 °C.

In accordance with the method of the present invention a humid atmosphere may be maintained within the oven by introducing water or steam into the oven. If parts of the oven are heated to temperature well above 100 °C, it may be convenient to generate steam by simply bringing water in contact with these hot parts.

As mentioned herein before it is a critical aspect of the present invention that during the first heating step the atmosphere is maintained at a sufficiently high dewpoint to ensure that the exterior of the dough piece will not start to form a crust prematurely. In a preferred embodiment, the first heating step comprises heating the dough piece in an oven comprising a humid atmosphere with a dewpoint of at least 50°C, more preferably of at least 70°C and most preferably of at least 80°C.

The present method is unique in that the first heating step utilises the introduction of large quantities of water into the oven. Typically, during the first heating step water is introduced into the oven in an amount of at least 0.051/kg of dough. Preferably the amount of water introduced during the first heating step exceeds 0.08 1/kg, more preferably it exceeds 0.1 1/kg. Usually, the amount of water introduced in the oven during the first heating step will not exceed 1.01/kg, preferably it will not exceed 0.5 1/kg. It is noted that the aforementioned quantities refer to the amount of water added, calculated as liquid water rather than steam.

The first heating step may be carried out in an oven comprising an essentially stationary atmosphere or an oven in which the atmosphere is being moved around throughout the oven by, for instance, fans. Preferably, the first heating step is carried out in an oven comprising a largely stationary atmosphere as evidenced by an average heat transfer coefficient of not more than 15 W/m².°C, preferably of not more than 12 W/m².°C, most preferably of not more than 10 W/m².°C.

The atmosphere in the oven may suitably consist of air. It is also possible, however, to employ an atmosphere that has a composition which is different from air. Indeed it may be advantageous to, for instance, employ a combination of air and one or more gases to manipulate the dewpoint and/or relative humidity of the atmosphere.

Although it is an essential aspect of the present method that a significant part of the frozen dough piece is defrosted, it is not necessary to continue the first heating step until the complete piece has been defrosted. Indeed, it was found that the optimum balance between quality of the baked product and processing time was achieved if parts of the interior of the dough piece are still frozen when the subsequent baking step commences.

Once the frozen dough piece has been thawed to a significant extent, said piece may be baked under a relatively dry atmosphere to obtain a baked product with a crispy crust that does not show serious defects. Typically, the subsequent baking step comprises baking the dough piece in an oven containing an atmosphere with a temperature of at least 150 °C for at least 10 minutes, preferably for at least 15 minutes, more preferably for at least 20 minutes and most preferably for at least 25 minutes. Usually the subsequent baking step is completed within 60 minutes. The temperature of the atmosphere during the subsequent baking step will usually increase steadily during the baking the process. Typically, during the subsequent baking step the oven atmosphere will reach a temperature of at least 170°C, preferably of at least 180 °C.

In a preferred embodiment of the present method the subsequent baking step comprises baking the dough piece in an oven comprising an atmosphere that is being moved dynamically, e.g. by fans, throughout the oven in order to stimulate heat transfer from the hot atmosphere to the dough piece. Typically, during the subsequent baking step the average heat transfer coefficient is at least 18 W/m².°C, preferably it is least 20 W/m².°C.

The present method may suitably be used to bake off various types of frozen dough pieces, including frozen non-proofed dough pieces, frozen partially proofed dough pieces and frozen pre-proofed dough pieces. A disadvantage of frozen pre-proofed dough pieces is associated with the relatively low density of these products. Such a low density has a major impact on transportation costs and the requirements for freezer and shelf space. Furthermore, pre-proofed doughs are very fragile which means that they have to be handled with care. Thus, in a preferred embodiment of the invention, the dough pieces are non-proofed or partially proofed dough pieces.

Best results are obtained with the present method if the frozen dough piece is a partially proofed dough piece. Thus, in a particularly preferred embodiment the frozen dough piece is a partially proofed frozen dough piece, in particular a partially proofed dough piece with a specific volume of at least 1.2 ml/g, more preferably at least 1.5 ml/g and most preferably at least 2.0 ml/g. Typically, the specific volume of the partially proofed frozen dough piece will not exceed 3.5 ml/g, preferably it will not exceed 3.4 ml/g, and most preferably it will not exceed 3.3 ml/g.

The terminology "partially proofed" refers to the fact that the frozen dough piece has not been fully (maximally) proofed and that in order to yield a good quality baked product it should undergo significant volume increase during baking as a result of additional proofing and ovenspring.

In a particular preferred embodiment the specific volume of the partially proofed frozen dough piece increases by at least a factor 1.4, more preferably by at least a factor 1.6, most preferably by at least a factor 1.8 when the dough piece is allowed to develop into a fully proofed dough. In order to establish the amount of volume increase that can be obtained by further proofing a dough piece, such a piece should be thawed under mild conditions during which the temperature throughout the dough piece remains below 40 °C, following which the dough piece is allowed to rest at 37 °C until such time that the volume of the dough piece no longer increases. The specific volume of the dough piece at maximum volume divided by the specific volume of the frozen partially proofed dough piece equals the factor of increase.

A crucial characteristic of the partially proofed dough piece resides in its ability to increase volume when it is baked in accordance with the present method. Typically, during the first heating step, the specific volume of the frozen dough piece increases to at least 1.7 ml/g, preferably to at least 1.9 ml/g, more preferably to at least 2.0 ml/g. Usually, the specific volume of the dough piece will not exceed 5.6 ml/g at the end of the first heating step. Preferably, the specific volume will not exceed 5.0 ml/g at the end of the first heating step.

The present method enables the preparation of a baked product that exhibits a relatively high specific volume, particularly as a result of the further proofing and/or ovenspring of the dough. Typically, said baked product has a specific volume of at least 4.0 ml/g, preferably a specific volume of between 4.2 and 6.0 ml/g.

The inventors have found that the subsequent baking step produces particularly good results if it comprises a first phase during which the internal atmosphere of the oven is recirculated, followed by another phase in which the internal atmosphere is replenished at a sufficiently high rate to maintain an oven dewpoint temperature of less than 50°C.

The present invention offers the advantage that a high quality baked product can be obtained from a frozen dough piece within a relatively short time period. After removal of the frozen dough from the freezer a fully baked product of good quality can be obtained within 120 minutes. The combination of the first heating step and the subsequent baking step is preferably completed in 15 to 90 minutes, more preferably in 20 to 80 minutes.

As mentioned herein before, the benefits of the present invention are particularly pronounced in relatively large dough pieces, particularly dough pieces having a weight of at least 400 g, more particularly of at least 600 g, e.g. of 600-1000 g. Such relatively large frozen dough pieces are particularly prone to cracking and tearing when baked off straight from the freezer.

Another important factor that determines the appearance of frozen dough pieces after baking is the shape of the dough piece and its specific volume. A dough piece in the form of a thin cylinder will be less prone to the tearing and cracking problem than a dough piece of the same weight with a bolder cylinder form or bolder largely spherical form. Similarly, dough pieces with a high specific volume will develop less tears and cracks than similar dough pieces with a lower specific volume. Consequently, the benefits of the present invention are particularly pronounced in dough pieces wherein the smallest diameter of the piece divided (in cm) by the specific volume (in ml/g) exceeds 2.0. Even more preferably, the present method is employed for baking of frozen dough pieces in which the latter ratio exceeds 2.5, most preferably exceeds 3.0.

The present invention may suitably be employed in the preparation of a variety of dough based bakery products. Best results are obtained when the method is employed to produce bread. The term bread also encompasses bread products obtained from laminated doughs such as croissants. Most preferably, however, the present method employs non-laminated dough.

The invention is further illustrated by means of the following examples.

### EXAMPLES

### Example 1

400 g and 800 g white bloomer breads and 800 g multi-grain bloomer breads were prepared on the basis of the following recipes (in bakers%):

| | White bloomer | Multi-grain bloomer |
|---|---|---|
| Flour | 100 | 100 |
| Water | 65 | 70 |
| Seeds | | 20 |
| Yeast | 2.5 | 3.5 |
| Bread improver | 6.5 | 6.5 |
| Salt | 2 | 2.5 |

Dough was prepared from the above ingredients by slowly mixing the ingredients in a spiral mixer for about 3 minutes, followed by fast mixing for about 7 minutes. The resulting dough was divided into dough pieces of each 950 g. The dough pieces were allowed to rest for 15 minutes. Subsequently, the dough pieces were proofed at 34 °C and a relative humidity of 80% for 60 minutes. Immediately after proofing, the partially proofed dough pieces were frozen at -35 °C for 75 minutes. Subsequently, the frozen pieces were transferred into plastic bags which were sealed and stored at -20 °C.

The frozen dough pieces thus obtained were baked off by means of an ordinary baking process and a baking process according to the present invention. The baking conditions employed are summarised in the following table.

| | Conventional method | | | Method of the invention | | |
|---|---|---|---|---|---|---|
| | Time (sec.) | Temp. (°C) | Damper | Time (sec.) | Temp. (°C) | Damper |
| Steam ^{#} | 5 | 230 | Closed | 900 | 120 | Closed |
| Phase 1 | 1200 | 220 | Closed | 900 | 160 | Closed |
| Phase 2 | 1500 | 220 | Open | 900 | 180 | Closed |
| Phase 3 | | | | 600 | 200 | Open |

| | | | | | | |
|---|---|---|---|---|---|---|
| ^{#}Steam injection ends at the beginning of phase 1 | | | | | | |

In the conventional method, 0.03 litre of steam is injected per kg of dough. In the method of the invention, 0.18 litre of steam is injected.
The breads obtained from the conventional baking process were found to exhibit a specific volume that was substantially lower than the specific volume of the breads obtained with the baking method according to the present invention. The breads obtained with the conventional method has very irregular, ragged shape, exhibited a dull, matt, blochy appearance as well as an irregular crumb (very open in combination with very dense structure). In contrast, the breads obtained with the method of the invention had a very regular shape, combined with a glossy appearance and a regular slight open crumb structure.

### Example 2

Crusty rolls (70 g) were prepared on the basis of the following recipes (in bakers%):

| | |
|---|---|
| Flour | 100 |
| Water | 65 |
| Yeast | 2.5 |
| Bread improver | 6.5 |
| Salt | 2 |

Dough was prepared from the above ingredients by slowly mixing the ingredients in a spiral mixer for about 3 minutes, followed by fast mixing for about 7 minutes. The resulting dough was divided into dough pieces of each 70 g. The dough pieces were proofed at 34 °C and a relative humidity of 80% for 60 minutes. Immediately after proofing, the partially proofed dough pieces were frozen at -35 °C for 30 minutes. The frozen pieces were transferred into plastic bags, sealed and stored at -20 °C.

The frozen dough pieces thus obtained were baked off by means of the method according to the present invention as described in Example 1. The crusty rolls obtained from the oven had a specific volume, shape and crumb structure that are typical for this type of product.

### Example 3

Croissants (65 g) were prepared on the basis of the following recipes (in bakers%):

| | |
|---|---|
| Flour | 100 |
| Water | 56 |
| Yeast | 5 |
| Bread improver | 5 |
| Salt | 2 |
| Margarine | 40 |

Dough was prepared from the above ingredients by slowly mixing the ingredients (except for the margarine) in a spiral mixer for about 3 minutes, followed by fast mixing for about 7 minutes. The dough was allowed to rest for 15 minutes. The rested dough was laminated into 16 layers with the help of the margarine. Subsequently, the laminated dough was cut into triangles that were rolled into croissant shape. The dough pieces were proofed at 34 °C and a relative humidity of 80% for 30 minutes. Immediately after proofing, the partially proofed dough pieces were frozen at -35 °C for 30 minutes. The frozen pieces were transferred into plastic bags, sealed and stored at -20 °C.

The frozen dough pieces thus obtained were baked off by means of the method according to the present invention as described in Example 1. The croissants obtained from the oven had a specific volume, shape and crumb structure that are typical for this type of product.

## Claims

1. A method of baking a frozen dough piece in an oven using a multi-step baking program, said method comprising a first step of heating the frozen dough piece in an oven comprising a humid atmosphere with a dewpoint of at least 40 °C for a sufficiently long period to thaw the exterior of the dough piece to a depth of at least 5 mm and a subsequent step of baking the dough piece in an oven comprising a dry atmosphere with a temperature of at least 140 °C, to obtain a baked product exhibiting a soft crumb and a crispy, browned crust.

2. Method according to claim 1, wherein a layer of condensed moisture is maintained on the dough piece throughout the first heating step.

3. The method according to claim 1 or 2, wherein the first heating step comprises heating the dough piece in an oven comprising a humid atmosphere with a dewpoint of at least 40 °C, preferably of at least 60 °C, between 3 and 45 minutes.

4. The method according to any one of the preceding claims, wherein the first heating step comprises heating the dough piece in an oven comprising a humid atmosphere between 6 and 40 minutes, preferably between 8 and 30 minutes.

5. The method according to any one of the preceding claims, wherein the first heating step is carried out in an oven comprising a largely stationary atmosphere as evidenced by an average heat transfer coefficient of not more than 15 W/m².°C.

6. The method according to any one of the preceding claims, wherein the subsequent baking step comprises baking the dough piece in an oven comprising an atmosphere with a temperature of at least 150 °C for at least 10, preferably at least 15 minutes.

7. The method according to claim 6, wherein the subsequent baking step comprises baking the dough piece in an oven comprising an atmosphere that is being moved dynamically throughout the oven as evidenced by an average heat transfer coefficient of at least 18 W/m².°C.

8. Method according to any one of the preceding claims, wherein the frozen dough piece is a partially proofed frozen dough piece with a specific volume of between 1.2 and 3.5 ml/g, preferably of between 1.5 and 3.4 ml/g.

9. Method according to any one of the preceding claims, wherein the specific volume of the frozen dough piece increases to at least 1.7 ml/g, preferably to between 1.9 and 5.6 ml/g during the first step.

10. Method according to any one of the preceding claims, wherein the specific volume of the baked product is at least 4.0 ml/g, preferably between 4.2 and 6.0 ml/g.

11. Method according to any one of the preceding claims, wherein the combination of the first heating step and the subsequent baking step is completed in 15 to 90 minutes, preferably in 20 to 80 minutes.

12. Method according to any one of the preceding claims, wherein the dough piece has a weight of at least 400 grams, preferably of at least 600 grams.

## Patentansprüche

1. Verfahren zum Backen eines gefrorenen Teigstücks in einem Ofen unter Verwendung eines mehrstufigen Backprogramms, wobei das Verfahren umfasst einen ersten Schritt des Erwärmens des gefrorenen Teigstücks in einem Ofen umfassend eine feuchte Atmosphäre mit einem Taupunkt von mindestens 40°C über einen ausreichend langen Zeitraum, um das Äußere des Teigstücks in einer Tiefe von mindestens 5 mm aufzutauen, und einen folgenden Schritt des Backens des Teigstücks in einem Ofen umfassend eine trockene Atmosphäre mit einer Temperatur von mindestens 140°C, um ein gebackenes Produkt zu erhalten, das eine weiche Krume und eine knusprige, gebräunte Kruste zeigt.

2. Verfahren nach Anspruch 1, bei dem eine Schicht aus kondensierter Feuchtigkeit während des ganzen ersten Erwärmungsschritts auf dem Teigstück beibehalten wird.

3. Verfahren nach Anspruch 1 oder 2, bei dem der erste Erwärmungsschritt das Erwärmen des Teigstücks in einem Ofen umfassend eine feuchte Atmosphäre mit einem Taupunkt von mindestens 40°C, bevorzugt von mindestens 60°C, zwischen 3 und 45 min umfasst.

4. Verfahren nach irgendeinem der vorhergehenden Ansprüche, bei dem der erste Erwärmungsschritt das Erwärmen des Teigstücks in einem Ofen umfassend eine feuchte Atmosphäre zwischen 6 und 40 min, bevorzugt zwischen 8 und 30 min, umfasst.

5. Verfahren nach irgendeinem der vorhergehenden Ansprüche, bei dem der erste Erwärmungsschritt in einem Ofen durchgeführt wird, der eine weitgehend stationäre Atmosphäre umfasst, wie durch einen mittleren Wärmeübertragungskoeffizienten von nicht mehr als 15 W/m² · °C belegt.

6. Verfahren nach irgendeinem der vorhergehenden Ansprüche, bei dem der folgende Backschritt das Backen des Teigstücks in einem Ofen umfassend eine Atmosphäre mit einer Temperatur von mindestens 150°C für mindestens 10 min, bevorzugt mindestens 15 min, umfasst.

7. Verfahren nach Anspruch 6, bei dem der folgende Backschritt das Backen des Teigstücks in einem Ofen umfassend eine Atmosphäre, die dynamisch durch den ganzen Ofen bewegt wird, wie durch einen mittleren Wärmeübertragungskoeffizienten von mindestens 18 W/m² · °C belegt, umfasst.

8. Verfahren nach irgendeinem der vorhergehenden Ansprüche, bei dem das gefrorene Teigstück ein teilweise gehen gelassenes gefrorenes Teigstück mit einem spezifischen Volumen zwischen 1,2 und 3,5 ml/g, bevorzugt zwischen 1,5 und 3,4 ml/g, ist.

9. Verfahren nach irgendeinem der vorhergehenden Ansprüche, bei dem das spezifische Volumen des gefrorenen Teigstücks sich während des ersten Schritts auf mindestens 1,7 ml/g, bevorzugt zwischen 1,9 und 5,6 ml/g, erhöht.

10. Verfahren nach irgendeinem der vorhergehenden Ansprüche, bei dem das spezifische Volumen des gebackenen Produkts mindestens 4,0 ml/g, bevorzugt zwischen 4,2 und 6,0 ml/g, beträgt.

11. Verfahren nach irgendeinem der vorhergehenden Ansprüche, bei dem die Kombination des ersten Erwärmungsschritts und des folgenden Backschritts in 15 bis 90 min, bevorzugt in 20 bis 80 min, vervollständigt ist.

12. Verfahren nach irgendeinem der vorhergehenden Ansprüche, bei dem das Teigstück ein Gewicht von mindestens 400 g, bevorzugt mindestens 600 g, aufweist.

## Revendications

1. Procédé de cuisson d'un morceau de pâte congelée dans un four utilisant un programme de cuisson en plusieurs étapes, ledit procédé comprenant une première étape consistant à chauffer le morceau de pâte congelée dans un four contenant une atmosphère humide avec un point de rosée d'au moins 40 °C pendant une période de temps suffisamment longue pour décongeler l'extérieur du morceau de pâte jusqu'à une profondeur d'au moins 5 mm, puis une étape ultérieure de cuisson du morceau de pâte dans un four contenant une atmosphère sèche avec une température d'au moins 140 °C pour obtenir un produit de boulangerie présentant une mie molle et une croûte brune et croustillante.

2. Procédé selon la revendication 1, dans lequel une couche d'humidité condensée est maintenue sur le morceau de pâte tout au long de la première étape de chauffage.

3. Procédé selon la revendication 1 ou 2, dans lequel la première étape de chauffage comprend le chauffage du morceau de pâte dans un four contenant une atmosphère humide avec un point de rosée d'au moins 40 °C, de préférence d'au moins 60 °C, pendant 3 à 45 minutes.

4. Procédé selon l'une quelconque des revendications précédentes, dans lequel la première étape de chauffage comprend le chauffage du morceau de pâte dans un four contenant une atmosphère humide pendant 6 à 40 minutes, de préférence pendant 8 à 30 minutes.

5. Procédé selon l'une quelconque des revendications précédentes, dans lequel la première étape de chauffage est réalisée dans un four contenant une atmosphère largement stationnaire comme en atteste le coefficient de transmission de la chaleur moyen de 15 W/m².°C au plus.

6. Procédé selon l'une quelconque des revendications précédentes, dans lequel l'étape de cuisson ultérieure comprend la cuisson du morceau de pâte dans un four contenant une atmosphère à une température d'au moins 150 °C pendant au moins 10 minutes, de préférence au moins 15 minutes.

7. Procédé selon l'une quelconque des revendications précédentes, dans lequel l'étape de cuisson ultérieure comprend la cuisson du morceau de pâte dans un four contenant une atmosphère qui est mise en mouvement de façon dynamique, à l'intérieur du four, comme en atteste un coefficient de transmission de la chaleur moyen d'au moins 18 W/m².°C.

8. Procédé selon l'une quelconque des revendications précédentes, dans lequel le morceau de pâte congelée est un morceau de pâte congelée partiellement fermentée ayant un volume spécifique compris entre 1,2 ml/g et 3,5 ml/g, de préférence compris entre 1,5 ml/g et 3,4 ml/g.

9. Procédé selon la revendication 6, dans lequel le volume spécifique du morceau de pâte congelée augmente jusqu'à au moins 1,7 ml/g, de préférence jusqu'à entre 1,9 ml/g et 5,6 ml/g au cours de la première étape.

10. Procédé selon l'une quelconque des revendications précédentes, dans lequel le volume spécifique du produit de boulangerie est d'au moins 4 ml/g, de préférence compris entre 4,2 ml/g et 6,0 ml/g.

11. Procédé selon l'une quelconque des revendications précédentes, dans lequel la combinaison de la première étape de chauffage et de l'étape de cuisson ultérieure est parachevée au bout de 15 à 90 minutes, de préférence de 20 à 80 minutes.

12. Procédé selon l'une quelconque des revendications précédentes, dans lequel le morceau de pâte pèse au moins 400 grammes, de préférence au moins 600 grammes.
